# EUROPÄISCHE PATENTSCHRIFT

(11) **EP 0 797 697 B1**
(45) Veröffentlichungstag und Bekanntmachung des Hinweises auf die Patenterteilung: **08.03.2000**
(21) Anmeldenummer: 95942144.7
(22) Anmeldetag: 13.12.1995
(51) Int. Cl.: D04H 13/00, D04H 1/00

(54) **SELBSTKLEBENDES VERSTÄRKUNGSMATERIAL FÜR TEXTILFASERVLIESE**
SELF-ADHESIVE REINFORCING MATERIAL FOR TEXTILE FIBRE NON-WOVEN FABRICS
MATIERE ADHESIVE DE RENFORCEMENT POUR NAPPES DE FIBRES TEXTILES

(30) Priorität: 14.12.1994 DE 4444505
(43) Veröffentlichungstag der Anmeldung: 01.10.1997
(73) Patentinhaber: HP-CHEMIE PELZER RESEARCH & DEVELOPMENT Ltd., Waterford, County Waterford (IE)
(72) Erfinder: PELZER, Helmut, D-58454 Witten (DE)
(74) Vertreter: Jönsson, Hans-Peter, Dr.Dipl.-Chem.
(86) Internationale Anmeldenummer: EP9504930
(87) Internationale Veröffentlichungsnummer: WO9618763

(56) Entgegenhaltungen:
- EP-A- 0 310 200
- EP-A- 0 584 445
- WO-A-93/23596
- US-A- 4 766 029

## Beschreibung

Die Erfindung betrifft ein selbstklebendes bändchen- oder faserartiges Verstärkungsmaterial mit Bindemitteleigenschaft für Textilfaservliese, ein Verfahren zu seiner Herstellung, die Verwendung des Verstärkungsmaterials zur Herstellung von Textilfaservliesen, die so hergestellten Textilfaservliese sowie die Verwendung dieser Textilfaservliese im Automobilbereich.

Textilfaservliese sind im Automobilbereich ein häufig verwendeter Konstruktionswerkstoff mit breitem Eigenschaftsspektrum. Beispielweise wird Phenolharz-gebundenes Textilvlies seit langem unter anderem wegen seiner guten Dämpfungseigenschaften als Werkstoff für tragende und verkleidete Teile (rein oder als Verbundwerkstoff) in der Automobilindustrie im PKW- und LKW-Bau eingesetzt. Als kostengünstige Flachware diente dieses Produkt zunächst und ausschließlich Polsterzwecken. In jüngster Zeit stellte sich dieser Werkstoff jedoch in einer Reihe von Varianten dar, und ist vielseitig verwendbar. Formteile werden besonders bevorzugt.

Phenolharz-gebundenes Textilvlies ist in Rohdichten von 50 bis 1000 kg/cm³ bei Dicken von 5 bis 30 mm im Handel erhältlich. Es ist als sogenanntes Porenkomposit, bestehend aus drei Phasen (Baumwolle, gehärtetes Phenolharz und Luft) zu beschreiben - ein Konstruktionswerkstoff, dessen Eigenschaftsprofil in weiten Grenzen modifiziert werden kann. Baumwolle hat die Faserform, Phenolharz liegt punktförmig, auch netzflächig als eine Art Matrix vor.

Durch besondere Auswahl der Vliesstoffe kann die Akustik und die Festigkeit des Verbundwerkstoffs besonders gesteuert werden. Besonders bevorzugte Materialien zur Herstellung des Vliesstoffes sind Glasfaser-verstärkte oder Glasgitter-verstärkte Fasermaterialien, insbesondere Bindemittel enthaltende Textilvliese, vorzugsweise solche, die aus einem Baumwollmischgewebe bestehen. Diese Vliese werden durch Pressen bei erhöhter Temperatur auf die gewünschte Festigkeit gebracht.

Die besonderen Eigenschaften und die Leistungsfähigkeit dieser letztgenannten Produktgruppe erklären sich aus der chemischen und morphologischen Struktur der Baumwolle, sowie dem Duroplastcharakter der ausgehärteten Phenolharze, die üblicherweise als Bindemittel der Baumwollmischgewebevliese eingesetzt werden. Weitere Einflußgrößen sind die Verformbarkeit, die Bügelfähigkeit der Baumwolle, die statistische Bindepunkthäufigkeit und auch die Laminat- und/oder Mantelwirkung der längs von Fasern haftenden und so auch auskondensierten Bindemittelmoleküle.

Die Baumwolle übersteht den Fertigungsprozeß praktisch ohne Veränderung ihrer physikalisch-chemischen Eigenschaftsmerkmale. Sie verleiht dem Produkt besondere Qualitätsmerkmale wie Schall-Absorptionsfähigkeit, gute mechanische Festigkeitswerte, Schlagzähigkeit und Splitterfestigkeit in der Kälte.

Besonders bevorzugte Bindemittel für die Vliesstoffe sind ausgewählt aus Phenol-Formaldehyd-Harzen, Epoxidharzen, Polyesterharzen, Polyamidharzen, Polypropylen, Polyethylen und/oder Ethylvinylacetatcopolymeren. Phenolharze haben nach der Härtung die typischen Duroplasteigenschaften, die sich auf das Fertigprodukt übertragen. Das Textilvlies wird aus der Reißbaumwolle und dem pulvrigen Phenolharz üblicherweise auf trockenem Wege hergestellt. Die Aushärtung erfolgt entweder im Heizkanal oder über das ungehärtete Halbzeug als Zwischenstufe in der Presse. Für die Teile, die im Fahrzeugraum Verwendung finden sollen, wird ausgewähltes Textil eingesetzt.

In der WO 93/23596 A1 werden formbare Textilverbundvliese beschrieben, bei denen 40 bis 80 Gew.-% einer ersten thermoplastischen Faser und eine zweite thermoplastische Faser mit einem niedrigen Schmelzpunkt in eine Vliesstruktur eingebracht werden und mit den Fasern intensiv vermischt werden. Anschließend wird die Vliesstruktur auf eine Temperatur oberhalb des Schmelzpunktes der zweiten Faser jedoch unterhalb der der ersten Faser erwärmt, um die zweite Faser unter Bildung eines thermoplastischen Harzes zu verflüssigen. Die Textilfaservliesstruktur wird anschließend verpreßt um das Bindemittelharz in Hohlräume einfließen zu lassen, wodurch die Luft verdrängt wird und die erste Faser eingeschlossen wird. Nach dem Abkühlen hat die Struktur einen verminderten Luftgehalt und schrumpft nicht bei der Wärmeumformung. Hierbei ist es erforderlich, zwei verschiedene Arten von Fasern in das Textilfaservlies einzugeben, was in der Praxis häufig dazu führt, daß eine inhomogene Verteilung der Fasern erreicht wird.

Zum Einbringen von Verstärkungs- und Bindemitteln ist im Stand der Technik auch der Einsatz von pulverförmigen thermoplastischen Bindemitteln neben den Verstärkungsmitteln, insbesondere Fasern, vorgeschlagen worden. Diese Einbringung von pulverförmigen Bindemittel hat jedoch bei der Herstellung von Textilfaservliesen außerordentlich große Nachteile, da hier häufig unter Verwendung von Luftdruck verpreßt wird, mit dem wenigstens ein Teil des Bindemittelharzes aus dem Preßwerkzeug ausgeblasen wird.

Zur Bindung des Bindemittelharzes an Verstärkungsfasern wurden im Stand der Technik sogenannte Komposit-Fasern vorgeschlagen, bei denen der Kern der Faser und dem äußeren Mantel unterschiedliche Schmelzpunkte aufwiesen. So ist es beispielsweise möglich, Komposit-Fasern herzustellen, die einen hochtemperaturfesten Kern aufweisen, der von einem niedrigschmelzenden, insbesondere thermoplastischen Bindemittelharz umgeben ist. Wenn diese Fasern dann dem Textilfaservlies zugegeben werden, das Textilfaservlies bei einer Temperatur verpreßt wird, die oberhalb des Schmelzpunktes des niedrig schmelzenden Fasermaterials liegt, jedoch unterhalb des Schmelzpunktes des Kerns der Verstärkungsfaser, so läßt sich ein außerordentlich fester Verbund mit dem Textilfaservlies erreichen. Die Herstellung derartiger Komposit-Fasern ist jedoch außerordentlich aufwendig. Derartige Bikomponentenfasern werden beispielsweise in Chemiefaser/Textilindustrie, 37./89. Jahrgang, August 1987 beschrieben.

US-A-4,766,029 betrifft ein Hausdämm-Material bestehend aus einem dreilagigen, halbdurchlässigen Vlieslaminat, wobei die beiden äußeren Lagen spinngebundenes Polypropylen mit einem hohen Schmelzindex umfassen. Die innere Lage besteht aus einer Zweikomponenten schmelzgeblasenen Schicht aus Polyethylen und Polypropylen. Das Laminat wird nach seiner Bildung kallandriert, so daß das Polyethylen schmilzt und in die Zwischenräume der beiden äußeren Schichten fließt und gleichzeitig die beiden Lagen miteinander verbindet.

EP 0 584 445 A1 beschreibt ein Innenausstattungteil für Fahrzeuge, insbesondere ein Autohimmel-Trägerteil, in ein- oder dreischichtiger Ausführung, das aus in den der Hitzeeinwirkung ausgesetzten Schicht(en) aus 25 bis 100 Gew.-% Polybutylenterephthalat-Fasern und zu höchstens 75 Gew.-% aus schwerschmelzenden Polyesterfasern besteht.

WO 93/23596 beschreibt ein Verfahren zur Herstellung von Vlieslaminaten, wobei zwei Vliese mit Fasern unterschiedlicher Schmelzeigenschaften miteinander verbunden werden und anschließendes Schmelzen der niedrigschmelzenden Faser um ein Verbundmaterial herzustellen, daß nur geringe Luftlöcher aufweist.

Die EP 0 210 200 A2 beschreibt ein Vliesmaterial, das hergestellt wird durch Vermischen von hochschmelzenden Filamentfasern mit niedrigschmelzenden Filamentfasern.

Dementsprechend besteht die Aufgabe der vorliegenden Erfindung darin, ein preisgünstiges selbstklebendes bändchen- oder faserartiges Verstärkungsmaterial mit Bindemitteleigenschaft für Textilfaservliese zur Verfügung zu stellen. Ein geeignetes Verstärkungsmaterial sollte für die Verwendung in Textilfaservliesen geeignet sein, insbesondere für Textilfaservliese, die im Automobilbereich in vielfältiger Form eingesetzt werden.

Eine erste Ausführungsform der vorliegenden Erfindung besteht somit in einem selbstklebenden bändchen- oder faserartigen Verstärkungsmaterial mit Bindemitteleigenschaften für Textilfaservliese bestehend aus Laminaten wenigstens zweier oder mehrerer coextrudierter Lagen aus wenigstens einem hochtemperaturfesten Kunststoffmaterial (A) und wenigstens einem niedrigschmelzenden Kunststoffmaterial (B) .

Das erfindungsgemäße selbstklebende Verstärkungsmaterial ist somit gekennzeichnet durch eine wenigstens zweilagige Verbundstruktur wenigstens zweier chemisch und physikalisch unterschiedlicher Kunststoffmaterialien (A) und (B). Der wesentliche Unterschied zwischen dem Kunststoffmaterial (A) und dem Kunststoffmaterial (B) besteht in den Temperatureigenschaften. Während das Kunststoffmaterial (A) aus hochtemperaturfesten Materialien ausgewählt und damit dem Textilfaservlies eine Verstärkungswirkung verleiht, ist das niedrig schmelzende Kunststoffmaterial (B) aufgrund seiner Bindemitteleigenschaften geeignet, einen guten Verbund zwischen den Textilfasern, den Verstärkungsfasern und sich selbst aus dem hochtemperaturfesten Kunststoffmaterial (A) zu erzeugen.

In einer bevorzugten Ausführungsform der vorliegenden Erfindung ist das hochtemperaturfeste Kunststoffmaterial (A) ausgewählt aus Polyethylenterephthalat, Polybutylenterephthalat, Polyamiden und hochvernetzten Polyolefinen wie Polyethylen und/oder Polypropylen. Der Schmelzbereich sollte vorzugsweise im Temperaturbereich oberhalb 100°C, insbesondere oberhalb 150°C. Temperaturen im Bereich oberhalb 300°C sind besonders bevorzugt.

Die niedrigschmelzenden Kunststoffmaterialien (B) weisen vorzugsweise thermoplastische Eigenschaften auf. Thermoplaste können bekanntermaßen im erweichten Zustand durch Pressen, Extrudieren, Spritzgießen oder andere Formgebungsverfahren zu Formteilen verarbeitet werden. Gemäß der vorliegenden Erfindung wird die Auswahl der thermoplastischen Kunststoffmaterialien insbesondere durch den späteren Anwendungszweck der Textilfaservliese bestimmt. Hierbei ist auch im wesentlichen auf die spätere Temperaturbelastung des Textilfaservlieses abzustellen. Besonders bevorzugte thermoplastische Kunststoffmaterialien (B) sind ausgewählt aus niedrigschmelzenden Hochdruckpolyethylen, Niederdruckpolyethylen, Polypropylen, Polystyrol, Polyethylenmethacrylaten, Ethylen-Vinylacetat, Styrol-Acrylnitril, deren Copolymeren sowie copolymere Polyamide und Polyester. Besonders bevorzugt sind hierbei aufgrund der günstigen Kosten die Massenkunststoffe. Der Schmelzbereich sollte vorzugsweise im Bereich von 70 bis 100°C, insbesondere 70 bis 80°C, liegen.

Im Gegensatz zu den im Stand der Technik bekannten Komposit-Fasern bei denen sich die mikroskopische und makroskopischen Eigenschaften des Kerns und der äußeren Hülle unterscheiden, sind bei den Verstärkungsmaterialien gemäß der vorliegenden Erfindung lagenweise unterschiedliche Temperatureigenschaften vorhanden.

Die erfindungsgemäßen Verstärkungsmaterialien sollen in an sich bekannten Textilfaservliesen eingesetzt werden. Dementsprechend ist es erforderlich, daß das Schmelzverhalten sowie das Warmformverhalten der Kunststoffmaterialien (A) und (B) auf diese Materialien abgestimmt wird.

Die Temperatureigenschaften der unterschiedlichen Materialien der erfindungsgemäßen Verstärkungsmaterialien lassen sich besonders gut durch die Schmelzbereiche der Kunststoffmaterialien definieren. Im Sinne der vorliegenden Erfindung ist es besonders bevorzugt, daß der Schmelzbereich der hochtemperaturfesten Kunststoffmaterialien (A) wenigstens 50°C, insbesondere 100°C höher ist, als der Schmelzbereich der niedrigschmelzenden Kunststoffmaterialien (B).

Zur Erzielung eines ausgeprägten Verstärkungscharakters ist es im Sinne der vorliegenden Erfindung besonders bevorzugt, den Durchmesser und die Länge der selbstklebenden Verstärkungsmaterialien besonders einzustellen. Besonders bevorzugte Breiten und Höhen der im Sinne der vorliegenden Erfindung sind 20 bis 500 µm, insbesondere 50 bis 100 µm. Innerhalb des genannten Bereichs werden besonders gute Verstärkungseigenschaften erzielt. In gleicher Weise ist es bevorzugt, die Länge der selbstklebenden Verstärkungsmaterialien auf einen Bereich von 2 bis 50 mm, insbesondere 5 bis 20 mm einzustellen.

Das Grundkonzept der vorliegenden Erfindung geht von einem wenigstens zweilagigen Aufbau zweier coextrudierter Kunststoffmaterialien (A) und (B) aus, die insbesondere ohne zusätzliche Klebemittel miteinander verbunden sind. In gleicher Weise ist jedoch gemäß der vorliegenden Erfindung bevorzugt, die Zahl der Lagen zu erhöhen. So sind ohne weiteres Schichtaufbauten von drei, vier, fünf oder sechs Lagen der jeweiligen Materialien (A) und (B) möglich. Besonders bevorzugt im Sinne der vorliegenden Erfindung ist jedoch ein insgesamt dreilagiger Schichtaufbau, bei dem sich die Kunststoffmaterialien (A) und (B) wie folgt abwechseln:

Eine Lage des hochtemperaturfesten Kunststoffmaterials (B) ist durch jeweils eine Lage des niedrigschmelzenden Kunststoffmaterials (A) auf der Oberseite und der Unterseite des hochtemperaturfesten Kunststoffmaterials (B) bedeckt. In gleicher Weise ist jedoch auch ein inverser Schichtaufbau möglich, bei dem eine Lage des niedrigschmelzenden Kunststoffmaterials (A) von zwei Schichten des hochtemperaturfesten Kunststoffmaterials (B) bedeckt ist. Hierbei muß das Verstärkungsmittel beim Einsatz auf eine Temperatur gebracht werden, die ein Auslaufen des niedrigschmelzenden Kunststoffmaterials (A) aus der Sandwich-Anordnung erlaubt.

Eine weitere Ausführungsform der vorliegenden Erfindung besteht in dem Verfahren zur Herstellung der eingangs definierten Verstärkungsmaterialien. Diese können insbesondere durch Coextrusion von wenigstens zwei Lagen aus einem hochtemperaturfesten Kunststoffmaterial (A) und einem niedrigschmelzenden Kunststoffmaterial (B) bei einer Temperatur in dem oder oberhalb der Glasübergangsbereiche der Kunststoffmaterialien (A) und (B) und anschließendem Zerschneiden oder Zerfasern auf die gewünschten Maße mittels Schneide-, Preß- oder Schlagwerkzeugen erhalten werden.

Bei dem erfindungsgemäßen Verfahren ist die Coextrusion der unterschiedlichen Kunststoffmaterialien (A) und (B) von besonderer Bedeutung. Während die Extrusion von niedrig schmelzenden Kunststoffmaterialien (B) in der Regel unproblematisch von statten geht, ist die Extrusion von hochtemperaturfesten Kunststoffmaterialien (A), in der Praxis häufig mit Problemen verbunden, da die Materialien bei hoher Temperatur oft vernetzen oder sich gar zersetzen. Dementsprechend ist es erforderlich, die Extrusionsbedingungen den notwendigen Gegebenheiten, besonders den hochtemperaturfesten Kunststoffmaterialien (A), anzupassen.

Nach der Herstellung eines flächenförmigen Laminats aus den Kunststoffmaterialien (A) und (B) durch Coextrusion, wird dann in einem weiteren Arbeitsschritt ein selbstklebendes bändchen- oder faserartiges Verstärkungsmaterial hergestellt. Die oben definierten gewünschten Maße können mittels Schneiden, Pressen oder Schlagen erhalten werden.

Eine weitere Ausführungsform der vorliegenden Erfindung besteht somit in der Verwendung der eingangs definierten selbstklebenden bändchen- oder faserartiges Verstärkungsmaterialien zur Herstellung von Textilfaservliesen, insbesondere glasfaserverstärkten oder glasgitterverstärkten Fasermaterialien und Baumwollvliesen. Hierbei ist ein teilweiser oder vollständiger Ersatz der überlicherweise eingesetzten Phenolharzbindemittel möglich.

Die erfindungsgemäßen Textilfaservliese sind durch die besonderen Eigenschaften wie hohe Steifigkeit eines verpreßten Vlieses, Kunststoffplatten aus bekannten Kunststoffmaterialien sowie glasfaserverstärkten Polypropylenen oder ähnlichen Materialien überlegen, die ähnliches Gewicht aufweisen. Darüber hinaus verleihen die akustischen Eigenschaften, die sich aus der Porösität und dem Schichtaufbau des Materials ergeben, den Materialien eine besondere Eignung für den Automobilbereich.

Textilfaservliese im Sinne der vorliegenden Erfindung enthalten vorzugsweise Naturfasern, insbesondere Baumwolle, Flachs, Jute, Leinen, aber auch Kunstfasern wie Polybutylenterephthalate, Polyethylenterephthalate, Nylon 6, Nylon 66, Nylon 12, Viskose oder Rayon als Textilfaser, gegebenenfalls neben üblichen Bindemitteln.

Die Art und Menge der einzusetzenden selbstklebenden bändchen- und faserartigen Verstärkungsmaterialien wird im wesentlichen durch den Anwendungszweck der Textilfaservliese bestimmt. So wird im Allgemeinen der Einsatz von 5 bis 50 Gew.-%, insbesondere 20 bis 40 Gew.-% des selbstklebenden bändchen- und faserartigen Verstärkungsmaterials bezogen auf das Textilfaservlies eingesetzt. Für den Fall, daß noch weitere übliche Bindemittel in dem Textilfaservlies eingesetzt werden sollen, ist es jedoch möglich, die Menge des selbstklebenden bändchen- und faserartigen Verstärkungsmaterials entsprechend zu vermindern.

Eine weitere Ausführungsform der vorliegenden Erfindung betrifft das Verfahren zur Herstellung der oben definierten Textilfaservliese. Hierbei werden die Textilfasermaterialien mit den selbstklebenden bändchen- und faserartigen Verstärkungsmaterialien in geeigneter Weise kombiniert und durch Verpressen bei einer Temperatur oberhalb des Schmelzbereichs des niedrigschmelzenden Kunststoffmaterials (B) jedoch unterhalb des Zersetzungsbereich des hochtemperaturfesten Kunststoffmaterials (A) erhalten. Besonders bevorzugt im Sinne der vorliegenden Erfindung ist ein Temperaturbereich von 120 bis 250 °C, insbesondere 180 bis 250 °C, da bisher im Stand der Technik verwendete Textilfaservliese auch bei einer derartigen Temperatur gepreßt werden. In diesem Temperaturbereich vernetzen bestimmte Materialien, so daß ein besonders fester Verbund entsteht.

Die erfindungsgemäßen Verbundmaterialien können so wie sie sind im Automobilbereich eingesetzt werden. Darüber hinaus ist es aber auch im Sinne der vorliegenden Erfindung bevorzugt, diese mit Dekorschichten, beispielsweise Teppichbodenbelägen, zu versehen.

Eine weitere Ausführungsform der vorliegenden Erfindung besteht in der besonderen Verwendung der oben definierten Verbundwerkstoffe im Automobilbereich. Besonders bevorzugt werden die erfindungsgemäßen Verbundwerkstoffe zur akustischen Dämpfung in Bereichen Motorhaube, Stirnwand (beidseitig), Tunnel, Tür, Dach, Fußraum und dem Lüftungskanal, sowie als gegebenfalls selbsttragende Basis für Innenauskleidungen, insbesondere für Armaturenabdeckungen, Tunnelverkleidungen, Türverkleidungen, Rücklehnenverkleidungen und Reserveradabdeckungen sowie für Teile mit Doppelfunktion, insbesondere als Dachhimmel, Hutablage, Füllstück, Kofferraummatte und Radhausverkleidung eingesetzt.

## Patentansprüche

1. Bei einer Temperatur im Bereich von 120 bis 250 °C selbstklebendes bändchen- oder faserartiges Verstärkungsmaterial mit Bindemitteleigenschaften für Textilfaservliese bestehend aus Laminaten wenigstens zweier oder mehrerer extrudierter Lagen aus wenigstens einem hochtemperaturfesten Kunststoffmaterial (A) und wenigstens einem niedrigschmelzenden Kunststoffmaterial (B).

2. Verstärkungsmaterial nach Anspruch 1, dadurch gekennzeichnet, daß das hochtemperaturfeste Kunststoffmaterial (A), ausgewählt aus Polyethylenterephthalaten, Polybutylenterephthalaten, Polyamiden und hochvernetzten Polyolefinen wie Polyethylen und/oder Polypropylen.

3. Verstärkungsmaterial nach Anspruch 1, dadurch gekennzeichnet, daß das niedrigschmelzende Kunststoffmaterial (B) thermoplastische Eigenschaften hat und insbesondere aus Hochdruckpolyethylen, Niederdruckpolyethylen, Polypropylen, Polystyrol, Polymethylmethacrylaten, Ethylen-Vinylacetaten, Styrol-Acrylnitril, deren Copolymeren sowie copolymeren Polyamiden und Polyestern ausgewählt ist.

4. Verstärkungsmaterial nach einem oder mehreren der Ansprüche 1 bis 3, dadurch gekennzeichnet, daß der Schmelzbereich der hochtemperaturfesten Kunststoffmaterialien (A) wenigstens 50°C, insbesondere 100°C höher ist, als der Schmelzübergangsbereich der niedrigschmelzenden Kunststoffmaterialien (B).

5. Verstärkungsmaterial nach einem oder mehreren der Ansprüche 1 bis 4 mit einer Breite und Höhe von 20 bis 500 µm, insbesondere 50 bis 100 µm.

6. Verstärkungsmaterial nach einem oder mehreren der Ansprüche 1 bis 5 mit einer Länge von 2 bis 50 mm.

7. Verstärkungsmaterial nach einem oder mehreren der Ansprüche 1 bis 6, bestehend aus einer dreilagigen Schichtenfolge (A) - (B) - (A) oder (B) - (A) - (B) .

8. Verfahren zur Herstellung von bei einer Temperatur im Bereich von 120 bis 250 °C selbstklebenden bändchen- und faserartigen Verstärkungsmaterialien nach einem oder mehreren der Ansprüche 1 bis 7 durch Coextrusion von wenigstens zwei oder mehreren Lagen aus wenigstens einem hochtemperaturfesten Kunststoffmaterial (A) und wenigstens einem niedrigschmelzendem Kunststoffmaterial (B) und anschließendem Zerschneiden oder Zerfasern auf die gewünschten Maße mittels Schneide-, Preß- oder Schlagwerkzeugen.

9. Verwendung der Verstärkungsmaterialien gemäß einem oder mehreren der Ansprüche 1 bis 7 zur Herstellung von Textilfaservliesen, insbesondere glasfaserverstärkten oder glasgitterverstärkten Fasermaterialien und Baumwollvliesen.

10. Textilfaservlies enthaltend ein Verstärkungsmaterial wie in einem oder mehreren der Ansprüche 1 bis 7 definiert.

11. Textilfaservlies nach Anspruch 10, enthaltend Naturfasern, insbesondere Baumwolle, Flachs, Jute, Leinen und/oder Kunstfasern wie Polybutylenterephthalate, Polyethylenterephthalate, Nylon 6, Nylon 66, Nylon 12, Viskose und Rayon als Textilfaser, gegebenenfalls neben üblichen Bindemitteln.

12. Textilfaservlies nach Anspruch 11, enthaltend 5 bis 50 Gew.-%, insbesondere 20 bis 40 Gew.-% Verstärkungsmaterial bezogen auf das Textilfaservlies.

13. Verfahren zur Herstellung von Textilfaservliesen wie in einem oder mehreren der Ansprüche 10 bis 12 definiert durch Verpressen eines Textilfasermaterials mit einem bei einer Temperatur im Bereich von 120 bis 250 °C selbstklebenden bändchen- oder faserartigen Verstärkungsmaterial wie in einem oder mehreren der Ansprüche 1 bis 8 definiert, bei einer Temperatur oberhalb des Schmelzbereiches des niedrig schmelzenden Kunststoffmaterials (B) jedoch unterhalb des Zersetzungsbereiches des hochtemperaturfesten Kunststoffmaterials (A).

14. Verfahren nach Anspruch 13, dadurch gekennzeichnet, daß man bei 120°C bis 250°C, insbesondere 180°C bis 250°C verpreßt.

15. Verwendung eines Textilfaservlieses wie in einem oder mehreren der Ansprüche 10 bis 13 definiert zur Herstellung von Formteilen im Automobilbereich, insbesondere zur akustischen Dämpfung in den Bereichen Motorhaube, Stirnwand (beidseitig), Tunnel, Tür, Dach, Fußraum, Pumpen, A- bis D-Säule und Lüftungskanal und als gegebenenfalls selbsttragende Basis für Innenauskleidungen, insbesondere für Armaturenabdeckungen, Tunnelverkleidungen, Türverkleidungen, Rückenlehnenverkleidungen, A- bis D-Säulenverkleidungen und Reserveradabdeckungen sowie als Teile mit Doppelfunktion insbesondere als Dachhimmel, Hutablage, Füllstück, Kofferraummatte oder Radhausverkleidung.

## Claims

1. A ribbon-like or fibrous reinforcing material which is self-adhesive in the range of 120 to 250 °C having binder properties for nonwoven textile fabrics consisting of laminates of at least two or more extruded layers of at least one high-temperature stable plastic material (A) and at least one low-melting plastic material (B).

2. The reinforcing material according to claim 1, characterized in that the high-temperature stable plastic material (A) is selected from polyethylene terephthalates, polybutylene terephthalates, polyamides and highly crosslinked polyolefins such as polyethylene and/or polypropylene.

3. The reinforcing material according to claim 1, characterized in that the low-melting plastic material (B) has thermoplastic properties and is selected especially from high-pressure process polyethylene, low-pressure polyethylene, polypropylene, polystyrene, polymethylmethacrylates, ethylene vinyl acetates, styrene acrylonitrile, the copolymers thereof and copolymeric polyamides and polyesters.

4. The reinforcing material according to one or several of claims 1 to 3, characterized in that the melting range of the high-temperature stable plastic materials (A) is at least 50 °C, especially 100 °C higher than the melt transition range of the low-melting plastic materials (B).

5. The reinforcing material according to one or several of claims 1 to 4 of 20 to 500 µm, especially of 50 to 100 µm in width and in height.

6. The reinforcing material according to one or several of claims 1 to 5 of 2 to 50 mm in length.

7. The material according to one or several of claims 1 to 6 consisting of a three-layer (A)-(B)-(A) or (B)-(A)-(B) layer sequence.

8. A process for manufacturing ribbon-like or fibrous reinforcing materials which are self-adhesive in the range of 120 to 250 °C according to one or several of claims 1 to 7 by coextruding at least two or more layers of at least one high-temperature stable plastic material (A) and at least one low-melting plastic material (B) and subsequently cutting or reducing to fibres to the desired dimensions by means of cutting, pressing or striking tools.

9. The use of the reinforcing materials according to one or several of claims 1 to 7 for manufacturing nonwoven textile fabrics, especially glass-fibre reinforced or glass-gauze reinforced fibrous materials and cotton nonwoven fabrics.

10. A nonwoven textile fabric containing a reinforcing material defined in one or several of claims 1 to 7.

11. The nonwoven textile fabric according to claim 10 containing natural fibres, especially cotton, flax, jute, linen and/or synthetic fibres such as polybutylene terephthalates, polyethylene terephthalates, nylon 6, nylon 66, nylon 12, viscose and rayon as textile fibre, optionally in addition to common binders.

12. The nonwoven textile fabric according to claim 11 containing of 5 to 50 % by weight, especially of 20 to 40 % by weight of reinforcing material, based on the nonwoven textile fabric.

13. A process for manufacturing nonwoven textile fabrics defined in one or several of claims 10 to 12 by compressing a textile fibre material with a ribbon-like or fibrous reinforcing material which is self-adhesive in the range of 120 to 250 °C defined in one or several of claims 1 to 8 at a temperature above the melting range of the low-melting plastic material (B) but below the decomposition range of the high-temperature stable plastic material (A) .

14. The process according to claim 13, characterized in that one compresses at 120 °C to 250 °C, especially at 180 °C to 250 °C.

15. The use of a textile fibre fabric defined in one or several of claims 10 to 13 for manufacturing moulded articles in the automobile sector, especially for sound absorption in the areas of the hood, bulkhead (on both sides), tunnel, door, roof, footwell, pumps, A to D pillars and the air distribution duct and as an optionally self-supporting base for interior panels, especially for instrument covers, tunnel trims, door trims, back rest trims, A to D column trims and spare wheel covers as well as parts having a double function, especially as a roof liner, rear shelf, lining, boot mat or wheel housing liner.

## Revendications

1. Matière de renforcement de type à fibres ou à rubans auto-adhésive dans une gamme de températures de 120 à 250 °C et présentant des propriétés de liant pour textiles non tissés se composant de stratifiés d'au moins deux couches extrudées ou plus, contenant au moins une matière synthétique résistant aux températures élevées (A) et au moins une matière synthétique à bas point de fusion (B).

2. Matière de renforcement selon la revendication 1, caractérisée en ce que la matière synthétique résistant aux températures élevées (A) est sélectionnée parmi les téréphtalates de polyéthylène, les téréphtalates de polybutylène, les polyamides et les polyoléfines fortement réticulées comme le polyéthylène et/ou le polypropylène.

3. Matière de renforcement selon la revendication 1, caractérisée en ce que la matière synthétique à bas point de fusion (B) présente des propriétés thermoplastiques et en ce qu'elle est en particulier sélectionnée parmi le polyéthylène haute pression, le polyéthylène basse pression, le polypropylène, le polystyrène, les méthacrylates de polyméthyle, les vinylacétates d'éthylène, le styrène acrylonitrile, leurs copolymères ainsi que les polyamides et les polyesters copolymères.

4. Matière de renforcement selon une ou plusieurs des revendications 1 à 3, caractérisée en ce que la gamme de fusion des matières synthétiques résistant aux températures élevées (A) est supérieure d'au moins 50 °C, en particulier de 100 °C, à la gamme de transition de fusion des matières synthétiques à bas point de fusion (B).

5. Matière de renforcement selon une ou plusieurs des revendications 1 à 4, avec une largeur et une hauteur de 20 à 500 µm, en particulier de 50 à 100 µm.

6. Matière de renforcement selon une ou plusieurs des revendications 1 à 5, avec une longueur de 2 à 50 mm.

7. Matière de renforcement selon une ou plusieurs des revendications 1 à 6, se composant d'une suite de trois couches superposées (A) - (B) - (A) ou (B) - (A) - (B).

8. Procédé de fabrication de matières de renforcement de type à fibres ou à rubans auto-adhésives dans une gamme de températures de 120 à 250 °C selon une ou plusieurs des revendications 1 à 7, par coextrusion d'au moins deux ou plusieurs couches se composant d'au moins une matière synthétique résistant aux températures élevées (A) et d'au moins une matière synthétique à bas point de fusion (B), puis par déchiquetage ou effilochage selon les proportions souhaitées au moyen d'outils de découpe, de compression ou de percussion.

9. Utilisation des matières de renforcement selon une ou plusieurs des revendications 1 à 7 pour la fabrication de textiles non tissés, en particulier de matières fibreuses et de non-tissés de coton renforcé(e)s aux fibres de verre ou renforcé(e)s par des maillages de verre.

10. Textile non tissé comprenant une matière de renforcement, telle que définie dans une ou plusieurs des revendications 1 à 7.

11. Textile non tissé selon la revendication 10, comprenant des fibres naturelles, en particulier du coton, du lin, de la jute, de la toile et/ou des fibres synthétiques telles que les téréphtalates de polybutylène, les téréphtalates de polyéthylène, le Nylon 6, le Nylon 66, le Nylon 12, la viscose et la rayonne en tant que fibres textiles, outre, éventuellement les liants habituels.

12. Textile non tissé selon la revendication 11, contenant 5 à 50 % en poids, en particulier 20 à 40 % en poids, de matière de renforcement rapporté au textile non tissé.

13. Procédé de fabrication de textiles non tissés, tel que défini selon une ou plusieurs des revendications 10 à 12, par compression d'une matière textile fibreuse avec une matière de renforcement de type à fibres ou à rubans auto-adhésive dans une gamme de températures de 120 à 250 °C telle que définie dans une ou plusieurs des revendications 1 à 8, à une température qui dépasse la gamme de fusion de la matière synthétique à bas point de fusion (B) mais qui cependant demeure inférieure à la gamme de décomposition de la matière synthétique résistant aux températures élevées (A).

14. Procédé selon la revendication 13, caractérisé en ce que la compression est réalisée à une température comprise entre 120 ° C et 250 ° C, en particulier entre 180 ° C et 250 ° C.

15. Utilisation d'un textile non tissé tel que défini dans une ou plusieurs des revendications 10 à 13, pour la fabrication de pièces moulées dans le domaine de l'automobile, en particulier à des fins d'amortissement acoustique dans les zones du capot, du tablier (des deux côtés), du tunnel, des portes, du toit, de l'espace réservé aux pieds, des pompes, des colonnes A-D et du canal de ventilation et en tant que base éventuellement auto-portante pour revêtements intérieurs, en particulier pour des revêtements d'armatures, des revêtements de tunnels, des revêtements de portes, des revêtements de dossiers de sièges, des revêtements de colonnes A-D et des revêtements de roues de secours, et en tant que pièces ayant une fonction double en particulier d'habillage de plafond, de plage arrière, de cales de remplissage, de tapis de coffre arrière ou de revêtement de logement de passage de roue.
